# EUROPÄISCHE PATENTANMELDUNG

(11) **EP 4 814 632 A1**
(43) Veröffentlichungstag der Anmeldung: **30.09.2026**
(21) Anmeldenummer: 25166935.4
(22) Anmeldetag: 28.03.2025
(51) Int. Cl.: G05B 19/042, G05B 19/418

(54) **VERFAHREN UND ANORDNUNG ZUR STEUERUNG EINER INDUSTRIELLEN AUTOMATISIERUNGSANORDNUNG MITTELS DYNAMISCH ORCHESTRIERTER SOFTWARE-AGENTEN**

(71) Anmelder: Siemens Aktiengesellschaft, 80333 München (DE)
(72) Erfinder: Schnelzer, Nathalie, 91052 Erlangen (DE); Hadzalic, Armin, 90491 Nürnberg (DE); Herbort, Matthias, 92237 Sulzbach-Rosenberg (DE)
(74) Vertreter: Siemens Patent Attorneys

(57) **Zusammenfassung**

Die Erfindung betrifft ein Verfahren und eine Anordnung zur Steuerung einer industriellen Automatisierungsanordnung, wobei mittels zumindest eines auf künstlicher Intelligenz basierten Software-Agenten (AG) - Al-Agenten (AG) - anhand einer durch einen Benutzer (B) eingegebenen natürlichsprachigen Anfrage Steuerungsanweisungen für zumindest eine industrielle Steuerungseinrichtung (SE) der Automatisierungsanordnung generiert und durch die Steuerungseinrichtung (SE) zur Steuerung der Automatisierungsanordnung verwendet werden, und wobei der Steuerungseinrichtung (SE) zumindest ein Adapter (AD) zum Austausch der Steuerungsanweisungen zwischen dem Al-Agenten (AG) und der Steuerungseinrichtung (SE) zugeordnet ist. Dabei wird in einem ersten Schritt durch ein auf künstlicher Intelligenz basiertes Assistenzsystem (CP) - Al-Copilot (CP) - die Anfrage des Benutzers (B) zu einer lokalen Client-Komponente (CKO) eines Orchestrators übermittelt, in einem zweiten Schritt wird durch die Client-Komponente (CKO) die Anfrage mit Kontextinformationen über die Automatisierungsanordnung und mit Steuerungsinformationen über den zumindest einen lokalen Adapter (AD) der Steuerungseinrichtung (SE) ergänzt und zu einer Serverkomponente (SKO) des Orchestrators übermittelt, in einem dritten Schritt wird durch die Serverkomponente (SKO) anhand der ergänzten Anfrage zumindest einer der Al-Agenten (AG) zur Generierung zumindest eines Teils der zur Erfüllung der Anfrage benötigten Steuerungsanweisungen ausgewählt und abgefragt, wobei der jeweils abgefragte Al-Agent (AG) die Anfrage verarbeitet und eine Antwort mit den Steuerungsanweisungen an die Serverkomponente (SKO) zurückübermittelt, in einem vierten Schritt werden durch die Serverkomponente (SKO) die durch den oder die Al-Agenten (AG) generierten Steuerungsanweisungen zu der Client-Komponente (CKO) übermittelt, und in einem fünften Schritt wird durch die Client-Komponente (CKO) anhand der Kontextinformationen und den Steuerungsinformationen der oder die Adapter (AD) mit den Steuerungsanweisungen versorgt, und schließlich wird durch den oder die Adapter (AD) und die zumindest eine Steuerungseinrichtung (SE) die Automatisierungsanordnung gesteuert. Durch ein solches Verfahren ist es möglich, eine Anzahl - ggf. jeweils spezialisierter - Al-Agenten (AG), die in einer oder mehreren für diese geeigneten Ausführungsumgebung(en) ablaufen, zur Steuerung einer davon entkoppelten industriellen Automatisierungsanordnung einzusetzen.

## Beschreibung

Die Erfindung betrifft ein Verfahren zur Steuerung einer industriellen Automatisierungsanordnung mittels auf künstlicher Intelligenz basierten Software-Agenten gemäß dem Oberbegriff des Patentanspruchs 1, und eine Anordnung zur Steuerung einer industriellen Automatisierungsanordnung mittels auf künstlicher Intelligenz basierten Software-Agenten gemäß dem Oberbegriff des Patentanspruchs 8.

Al-Agenten verwenden "Large Language Models (LLMs)", um Lösungen für verschiedene Domänen bereitzustellen. Diese Al-Agenten können nicht nur textbasierte Antworten auf Anfragen erstellen, sondern ermöglichen ebenfalls die Ausführung von definierten Aktionen z.B. den Aufruf von Web-APls oder anderer Softwarekomponenten. Allgemeiner formuliert können Al-Agenten lokale Adapter zu Aktionen veranlassen, wobei die lokalen Adapter wiederum eine reale Aktion, insbesondere zur Steuerung einer industriellen Aufgabe, auslösen können, meist mittels einer industriellen Steuerung (beispielsweise einer Speicherprogrammierbaren Steuerung - SPS/PLC), die den Adapter aufweist oder mit diesem kommunikativ verbunden ist.

Aktuell können Al-Agenten Aktionen nur lokal ausführen. Die Ausführung von Aktionen ist daher also abhängig vom Ausführungsort des Al-Agenten. Diese Abhängigkeit ist ausfolgenden Gründen problematisch:
- Die Ausführung von Al-Agenten und verwendeter LLMs stellt hohe Anforderungen an benötigte Hardware-Umgebungen.
- Al-Agenten enthalten oft schützenswertes Wissen (intellectual property). Dieses Wissen soll oft nicht auf lokalen Geräten installiert werden, auf denen lokale Aktionen ausgeführt werden sollen (z.B. Engineering PCs, Industrielle Steuerungen oder HMI-Panels).
- Verteilte Ausführung von Aktionen getriggert von Al-Agenten ist aktuell nur mit zusätzlichen externen Methoden möglich und nicht Teil der Interaktion von Al-Client und Al-Agenten.

Verbreitete Agent- und LLM-Frameworks wie z.B. LangChain, LangGraph, AutoGen oder "Semantic Kernel" können Aktionen nur "lokal" ausführen. Ein Al-Agent, der z.B. in der Cloud ausgeführt wird, kann Aktionen nur in der Cloud ausführen. Das bedeutet, dass Al-Agenten aktuell in der Umgebung ausgeführt werden müssen, in der sie Aktionen ausführen sollen - oder dass Al-Agenten in ihrer Ausführungsumgebung externe Funktionalität verwenden, um eine Ausführung von Aktionen in Remote Clients zu ermöglichen.

Es ist also eine Aufgabe der vorliegenden Erfindung, künstliche Intelligenz, die in Al-Agenten realisiert ist, zur Steuerung von industriellen Vorgängen in einer verteilten Ausführungsumgebung, insbesondere in einem Cloud-Umfeld, nutzbar zu machen.

Die grundlegende Idee der erfindungsgemäßen Lösung dieser Aufgabe besteht darin, den Ort der Ausführung der Aktionen von Al-Agenten für industrielle Anwendung von dem Ort der Ausführung der Agenten selbst zu entkoppeln.

Die Lösung der Aufgabe ist insbesondere in den unabhängigen Patentansprüchen angegeben.

Dabei wird ein Verfahren zur Steuerung einer industriellen Automatisierungsanordnung vorgeschlagen, wobei mittels zumindest eines auf künstlicher Intelligenz basierten Software-Agenten - Al-Agenten - anhand einer durch einen Benutzer eingegebenen natürlichsprachigen Anfrage Steuerungsanweisungen für zumindest eine industrielle Steuerungseinrichtung der Automatisierungsanordnung generiert und durch die Steuerungseinrichtung zur Steuerung der Automatisierungsanordnung verwendet werden, und wobei der Steuerungseinrichtung zumindest ein Adapter zum Austausch der Steuerungsanweisungen zwischen dem Al-Agenten und der Steuerungseinrichtung zugeordnet ist. Dabei wird in einem ersten Schritt durch ein auf künstlicher Intelligenz basiertes Assistenzsystem - Al-Copilot - die Anfrage des Benutzers zu einer lokalen Client-Komponente eines Orchestrators übermittelt, in einem zweiten Schritt wird durch die Client-Komponente die Anfrage mit Kontextinformationen über die Automatisierungsanordnung und mit Steuerungsinformationen über den zumindest einen lokalen Adapter der Steuerungseinrichtung ergänzt und zu einer Serverkomponente des Orchestrators übermittelt, in einem dritten Schritt wird durch die Serverkomponente anhand der ergänzten Anfrage zumindest einer der Al-Agenten zur Generierung zumindest eines Teils der zur Erfüllung der Anfrage benötigten Steuerungsanweisungen ausgewählt und abgefragt, wobei der jeweils abgefragte Al-Agent die Anfrage verarbeitet und eine Antwort mit den Steuerungsanweisungen an die Serverkomponente zurückübermittelt, in einem vierten Schritt werden durch die Serverkomponente die durch den oder die Al-Agenten generierten Steuerungsanweisungen zu der Client-Komponente übermittelt, und in einem fünften Schritt wird durch die Client-Komponente anhand der Kontextinformationen und den Steuerungsinformationen der oder die Adapter mit den Steuerungsanweisungen versorgt, und schließlich wird durch den oder die Adapter und die zumindest eine Steuerungseinrichtung die Automatisierungsanordnung gesteuert. Durch ein solches Verfahren ist es möglich, eine Anzahl - ggf. jeweils spezialisierter - Al-Agenten, die in einer oder mehreren für diese geeigneten Ausführungsumgebung(en) ablaufen, zur Steuerung einer davon entkoppelten industriellen Automatisierungsanordnung einzusetzen.

Die Aufgabe wird außerdem durch eine Anordnung zur Steuerung einer industriellen Automatisierungsanordnung gelöst, wobei zumindest ein auf künstlicher Intelligenz basierter Software-Agent - AI-Agent - dazu eingerichtet ist, anhand einer durch einen Benutzer eingegebenen natürlichsprachigen Anfrage Steuerungsanweisungen für zumindest eine industrielle Steuerungseinrichtung der Automatisierungsanordnung zu generieren, wobei die Steuerungseinrichtung zur Steuerung der Automatisierungsanordnung eingerichtet ist, und wobei der Steuerungseinrichtung zumindest ein Adapter zum Austausch der Steuerungsanweisungen zwischen dem Al-Agenten und der Steuerungseinrichtung zugeordnet ist. Dabei umfasst die Anordnung ein auf künstlicher Intelligenz basiertes Assistenzsystem -AI-Copilot - zur Übermittlung der Anfrage des Benutzers zu einer lokalen Client-Komponente eines Orchestrators, wobei die Client-Komponente zur Ergänzung der Anfrage mit Kontextinformationen über die Automatisierungsanordnung und mit Steuerungsinformationen über den zumindest einen lokalen Adapter der Steuerungseinrichtung und zur Übermittlung der ergänzten Anfrage an eine Serverkomponente des Orchestrators vorgesehen ist, wobei die Serverkomponente dazu eingerichtet ist, anhand der ergänzten Anfrage zumindest einer der Al-Agenten zur Generierung zumindest eines Teils der zur Erfüllung der Anfrage benötigten Steuerungsanweisungen auszuwählen und abzufragen, wobei der Al-Agent zur Verarbeitung der Anfrage und zur Generierung und Rückübermittlung einer Antwort mit den Steuerungsanweisungen an die Serverkomponente ausgestaltet ist, wobei die Serverkomponente dazu eingerichtet ist, die durch den oder die Al-Agenten generierten Steuerungsanweisungen zu der Client-Komponente zu übermitteln, und wobei die Client-Komponente dazu eingerichtet ist, die Steuerungsanweisungen anhand der Kontextinformationen und den Steuerungsinformationen an den oder die Adapter zu übermitteln und durch den oder die Adapter und die zumindest eine Steuerungseinrichtung die Automatisierungsanordnung zu steuern. Mit dieser Anordnung können die bereits anhand des Verfahrens diskutierten Vorteile realisiert werden.

Vorteilhafte Ausgestaltungen des erfindungsgemäßen Verfahrens sind in den abhängigen Patentansprüchen angegeben. Die dabei beschriebenen Merkmale und deren Vorteile gelten sinngemäß auch für die erfindungsgemäße Vorrichtung. Die Merkmale der vorteilhaften Ausgestaltungen können sowohl einzeln als auch in sinnfälliger Kombination miteinander angewendet werden.

Vorteilhaft werden in dem dritten Schritt durch die Serverkomponente die relevanten Al-Agenten und die geeignete Aufrufsequenz basierend auf dem Text der Anfrage, der Liste der verfügbaren Agenten, Kontextinformationen, lokalen Fähigkeiten, und/oder dem Automatisierungs-Domänenwissen ermittelt. Damit sind die Auswahl und die Reihenfolge der Verwendung der einzelnen Al-Agenten nicht allein von der Anfrage des Benutzers abhängig, sondern werden auch durch bereits vorliegenden Informationen beeinflusst. Dies führt dazu, dass die Auswahl und die Aufrufreihenfolge treffsicherer sind und dazu, dass der Benutzer einfachere Anfragen oder Aufträge stellen kann, wobei dennoch der Steuerungszweck sicher erreicht wird.

Vorteilhaft sind die Al-Agenten als ein Dienst, insbesondere als ein RESTful-Dienst (siehe https://de.wikipedia.org/wiki/Representational State Transfer), eingerichtet, wobei in dem dritten Schritt die Anfrage und die Antwort in einem definierten Request- und Response-Format formuliert werden. Damit ist es möglich, verschiedene Al-Agenten jeweils autonom zu betreiben unflexibel für verschiedene Architekturen einzusetzen, ohne jeweils Anpassungsarbeit an den Interfaces leisten zu müssen.

Vorteilhaft umfasst die Antwort einen Antworttext, eine Rückfrage und/oder als Steuerungsanweisungen eine Job-Liste für Aktionen zumindest einen der Adapter. Damit wird verschiedenen möglichen Problemen begegnet, weil zum einen ein Antworttext zu einer verbesserten Kommunikation mit einem Benutzer führt, und weil zum anderen Rückfragen gezielt diejenigen Informationen abrufen - und zwar sowohl bei einem Benutzer oder bei anderen Systemteilen, beispielsweise den Adaptern - die zur Erfüllung der Aufgabe notwendig sind, und weil zum dritten Job-Listen besonders geeignet sind, sequenzielle industrielle Prozesse und Vorgänge zu steuern, sodass nicht für jeden Teilschritt eine erneute Kommunikation zwischen der industriellen Steuerung, dem zugeordneten Adapter und dem Albasierten System notwendig ist. Dabei wird vorteilhaft in dem fünften Schritt im Falle einer Rückfrage durch die Serverkomponente diese Rückfrage durch einen Dialog mit dem Benutzer oder durch eine automatisierte Anfrage an den Adapter oder andere Systemkomponenten gelöst und eine diesbezügliche Antwort über die Serverkomponente an den fragenden Al-Agenten zurückübermittelt, wonach dieser Al-Agent eine neue Antwort generiert bzw. seine zuvor für die Rückfrage unterbrochene Arbeit fortsetzt.

Es ist eine besondere Stärke des Orchestrators, eine Vielzahl von Al-Agenten, die jeweils besondere Fähigkeiten aufweisen können, dynamisch - das heißt flexibel zur Laufzeit - zur Lösung einer Steuerungsaufgabe einzusetzen. Dazu ist es von Vorteil, wenn Schritt durch die Serverkomponente Antworten verschiedener Al-Agenten zu derselben Anfrage zu einer für den jeweils betroffenen Adapter konsolidierten Antwort zusammengefasst werden.

Analog dazu sind regelmäßig in einer Automatisierungsanordnung eine Vielzahl von Steuerungen aktiv, sodass auch eine Vielzahl von Adapter zur jeweiligen Kommunikation mit diesen Steuerungen bzw. Steuerungseinrichtungen vorhanden sind. Vorteilhaft werden daher durch die Serverkomponente die Job-Listen an die jeweils zuständigen der Adapter verteilt. Darüber hinaus ist in einer besonders vorteilhaften Ausführung die Clientkomponente dazu eingerichtet, die Elemente einer Job-Liste jeweils dahingehend zu untersuchen, welche Steuerungseinrichtung und damit welcher Adapter zur Ausführung geeignet, zuständig oder am besten geeignet ist, und somit eine geeignete Distributierung der einzelnen Elemente von Job-Listen vorzunehmen bzw. zu korrigieren. Anstelle einer direkten Kommunikation mit den Steuerungen bzw. Steuerungseinrichtungen kann je nach Hersteller bzw. Konfiguration auch ein Engineering-System zwischengeschaltet sein, welches den Zugriff auf die Steuerungen bewerkstelligt.

Ein Ausführungsbeispiel des erfindungsgemäßen Verfahrens bzw. der erfindungsgemäßen Vorrichtung wird nachfolgend anhand der Zeichnungen erläutert.

Dabei zeigen:
- Figur 1: eine Systemübersicht der erfindungsgemäßen Anordnung,
- Figur 2: einen Anfrage-Antwort-Zyklus (Request-Response-Zyklus) mit der Ausführung lokaler Aktionen,
- Figur 3: das erfindungsgemäße Verfahren in einem Ablauf für autonome Zyklen, und
- Figur 4: autonome Zyklen und Interaktionszyklen mit dem strukturierten Request-Response-Format.

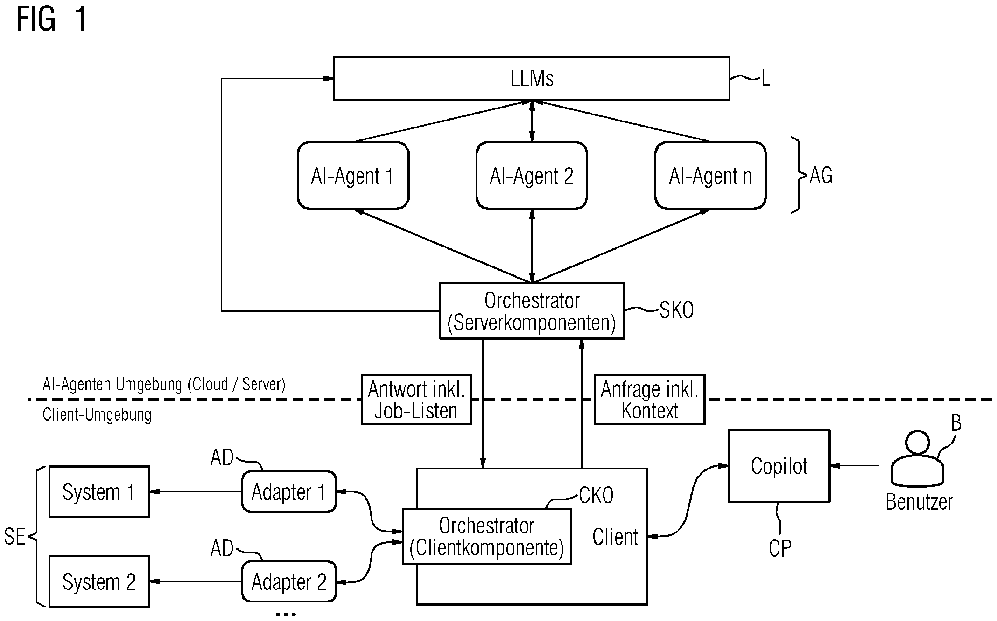

Die Figur 1 zeigt eine Systemübersicht der erfindungsgemäßen Anordnung. Im unteren Teil der Abbildung findet sich die Client-Umgebung, oft auch lokale Umgebung genannt. Dies ist der Ausführungskontext, mit dem der Benutzer B interagiert und aus dem heraus die industriellen Steuerungseinrichtungen SE, die hiermit System 1 und System 2 bezeichnet sind, angesteuert werden. Die Steuerungseinrichtungen SE können beispielsweise speicherprogrammierbare Steuerungen o. ä. Einrichtungen sein, die unmittelbar einen industriellen Prozess oder eine industrielle Automatisierung zur Produktion von Stückgütern oder dergleichen steuern. Die Steuerungseinrichtungen SE sind regelmäßig nicht identisch mit der Computer-Plattform, auf dem eine lokale Komponente, die sogenannte Client-Komponente CKO, des später näher beschriebenen Orchestrators abläuft. Wesentlich ist, dass der Benutzer B ausschließlich mit einer (künstlich) intelligenten Komponente, genannt Al-Copilot CP oder kurz Copilot CP, kommuniziert, die diesbezüglich eine Benutzeroberfläche zum Austausch natürlichsprachlicher Informationen und gegebenenfalls grafischer Informationen aufweist. Während die Client-Umgebung lokal in Bezug auf den gesteuerten industriellen Prozess ist, dafür aber nur beschränkte Fähigkeiten zur Ausführung von Programmen zur Realisierung künstlicher Intelligenz, den sogenannten Al-Agenten AG, aufweist, zeigt der obere Teil der Figur 1 eine leistungsfähige Plattform zur Ausführung solcher komplexer Anwendungen, beispielsweise ein Server in einer Cloud. In dieser Domäne ist auch die Serverkomponente SKO des Orchestrators angeordnet. Client-Komponente CKO und Serverkomponente SKO sind kommunikativ verbunden, beispielsweise über einen Internet-basierten Kommunikationskanal (z.B. https-Protokoll) oder ein virtuelles privates Netzwerk (VPN).

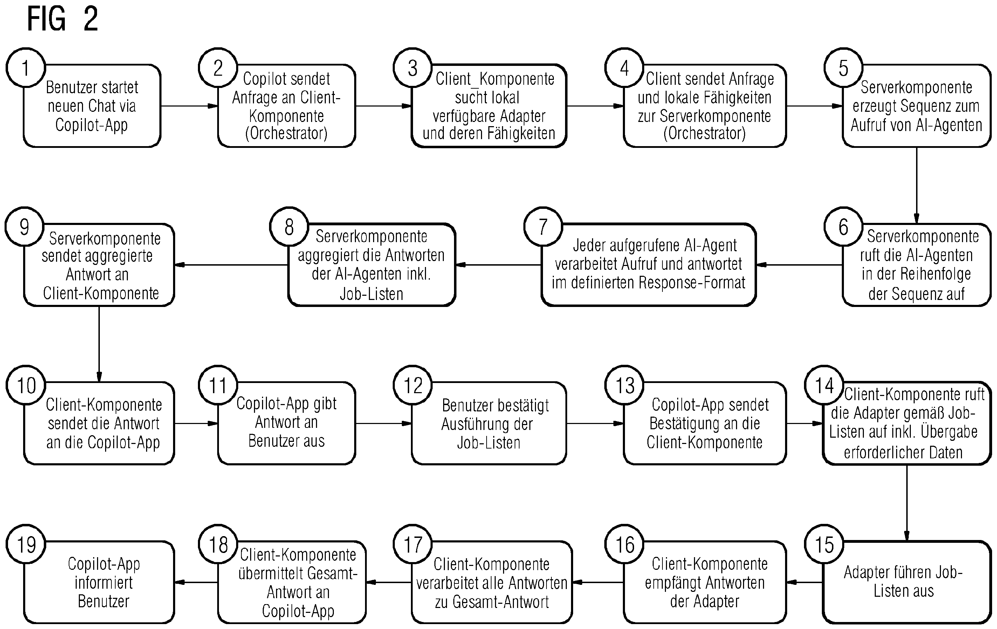

Die Figur 2 zeigt ein beispielhaftes Ablaufdiagramm eines Anfrage-Antwort-Zyklus mit der Ausführung lokaler Aktionen, also solche Aktionen, die durch die Steuerungseinrichtungen SE (in Figur 1 System 1, System 2 genannt) zur Beeinflussung der industriellen Automatisierungsanordnung durchgeführt werden. In der Figur 2 sind die Aktionen 1, ..., 19 in Form eines Ablaufs verzeichnet, wobei insbesondere die Aktionen 3, 7, 8, 14 und 15 sich von den aus dem Stand der Technik bekannten Aktionen unterscheiden. Wesentlich ist dabei in Schritt 3, dass die Client-Komponente CKO Informationen über die Adapter AD sammelt, wobei diese Informationen über die Adapter AD Auskunft über verfügbare Befehle, benötigte Parameter und über die Fähigkeiten ("skills") - im Kontext dieser Schrift auch Steuerungsinformationen genannt - der angeschlossen Steuerungseinrichtung SE bzw. der damit gesteuerten Maschinen oder Geräte geben. Dies ermöglicht es in den Schritten 7 und 8 den aufgerufenen Al-Agenten und der Serverkomponente SKO des Orchestrators, zielgerichtet Anweisungen und gegebenenfalls Rückfragen zu erstellen und die von den verschiedenen Al-Agenten AG gegebenen Antworten zu einer Gesamtantwort zu aktivieren, die dann schließlich an die Client-Komponente CKO weitergeleitet wird. Möglich ist das durch ein definiertes Request-Response-Format, welches es gestattet, verschiedenste Al-Agenten AG und verschiedenste Adapter AD für eine gemeinsame Arbeitsaufgabe zusammenwirken zu lassen.

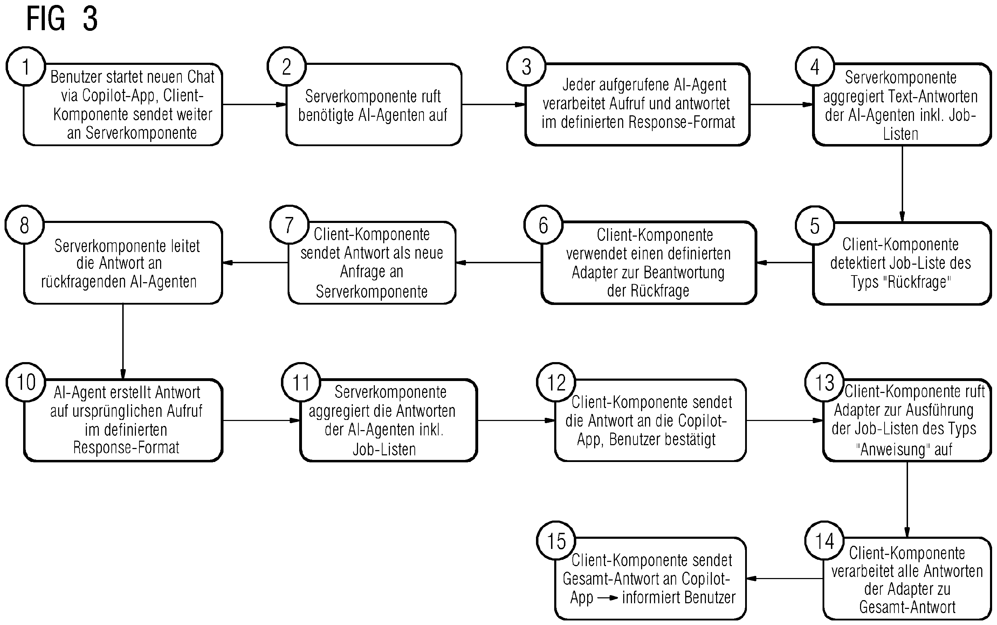

Die Figur 3 konkretisiert das erfindungsgemäße Verfahren für autonome Zyklen, wobei hier die Schritte 1, ..., 15 gezeigt sind. Im Unterschied zum Stand der Technik beschreiben hier die Schritte 3 - 5 den Fall, in dem die Al-Agenten AG nicht nur herkömmliche Job-Listen in Gestalt einer jeweils unmittelbar ausführbaren Anweisungsliste für die Adapter AD erstellen, sondern weitere Informationen zur Erstellung ihrer letztlich verwendbaren Antwort benötigen. Es wird also mit anderen Worten eine Job-Liste des Typs "Rückfrage" erstellt, wobei es einerseits sein kann, dass eine Rückfrage an den menschlichen Benutzer B erforderlich ist, andererseits weitere Informationen über das zu steuernde System, insbesondere der Adapter AD, benötigt werden. In der Figur 3 ist der Fall der Rückfrage an einen der Adapter AD dargestellt-siehe Schritt 6. Wie erwähnt, kann jedoch auch eine Anfrage über den Copilot CP an den Benutzer B geschickt werden. Nachdem alle Informationen bereitgestellt sind, wird (siehe Schritt 10 und 11) die endgültige Antwort formuliert, sodass nur noch Job-Listen des Typs "Anweisung" (siehe Schritt 13) mit Steuerungsanweisungen übrigbleiben, die letztlich - ggf. nach Bestätigung durch den Benutzer B - durch die Adapter AD und somit durch die Steuerungseinrichtung SE ausgeführt werden.

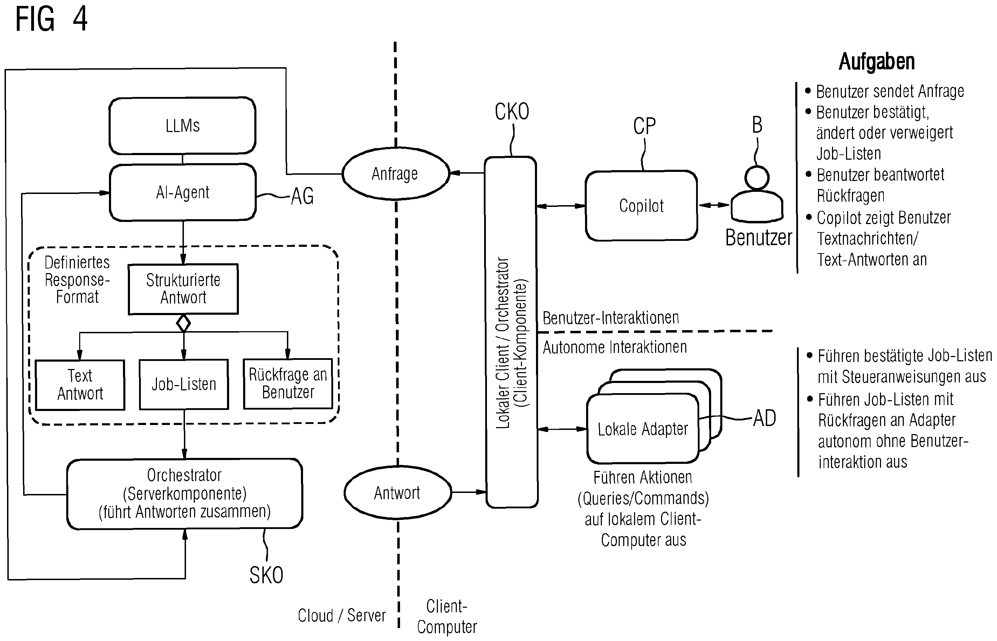

Die Figur 4 zeigt eine zu der Figur 1 alternative Darstellung, wobei hier auf der linken Seite die Ausführungsumgebung mit den Al-Agenten AG (Server, Cloud) gezeigt ist und auf der rechten Seite der Client-Computer mit den Adaptern AD und dem lokalen Copilot CP. Ganz rechts sind die Aufgaben des Verbundes aus Benutzer B und Copilot CP im oberen Teil und im unteren Teil die Aufgaben des Teils mit den lokalen Adaptern AD gezeigt. Die Client-Komponente CKO des Orchestrators stellt dabei einerseits das Bindeglied zwischen Copilot CP und den lokalen Adaptern AD dar, andererseits auch das Bindeglied zwischen dem Client-Computer und der übergeordneten Ausführungsumgebung (Server / Cloud) und der darin angeordneten Serverkomponente SKO dar.

Im Stand der Technik können Al-Agenten AG nur lokale Adapter AD Steuern, wobei im Stand der Technik ebenfalls stets eine 1 zu 1-Zuordnung zwischen einem Al-Agenten AG und einem Adapter AD vorgeschrieben ist. Diese Architektur erfordert erhebliche Rechenleistung "onpremise", also im lokalen industriellen Umfeld, zur Ausführung von Al-Agenten, die jeweils für sich nur einen in sich geschlossenen Teil einer Automatisierungsanordnung steuern können. Erfindungsgemäß werden diese Einschränkungen durch eine Entkopplung zwischen den AI-Agenten AG einerseits und den Adaptern AD, die schließlich die Steuerungseinrichtungen SE ansteuern, überwunden.

Diese Entkopplung wird durch die im Folgenden beschriebenen Mechanismen "Job-Listen" und eine "Orchestrierung" ermöglicht:
- Industrielle "Copilots" CP übertragen
   o eine textbasierte Anfrage,
   o Kontextinformationen, und
   o eine Liste der auf dem Client verfügbaren Aktionen (sog. Steuerungsinformationen) und deren benötigte Input Informationen.
- Der zentrale Orchestrator CKO, SKO ermittelt die relevanten Al-Agenten AG und eine geeignete Aufrufsequenz basierend auf dem Text der Anfrage, der Liste der verfügbaren Agenten AG, Kontextinformationen, lokalen Fähigkeiten, und/oder dem Automatisierungs-Domänenwissen.
- Der Orchestrator CKO, SKO ruft die Al-Agenten AG gemäß der ermittelten Aufrufsequenz auf. Die Al-Agenten AG sind als RESTful Service umgesetzt und implementieren standardisierte Interfaces (ein definiertes "Request" und "Response" Format). Die einleitend beschriebenen Probleme werden hierbei durch die Verwendung eines strukturierten "Response-Formats" adressiert.
- Die aufgerufenen Al-Agenten AG verarbeiten die Anfrage und erstellen eine entsprechende Antwort. Diese Antwort folgt dem definierten "Response"-Format und kann folgende Teile enthalten:
   o Antworttext ("Text-Response")
   o Rückfrage: Eine Rückfrage an einen Nutzer ("Query to the User")
   o Eine dynamisch erstellte Liste von "Job-Listen".

Jede Job-Liste ist eine geordnete Liste von Aktionen inklusive benötigter Daten/Parameter, die ein definierter lokaler Adapter ausführen soll. Job-Listen haben entweder den Typ Query oder Command. "Queries" fragen zusätzlich benötigte Informationen ("Steuerungsinformationen") automatisiert ab, während "Commands" konkrete Änderungen (Erstellen, Ändern oder Löschen von Daten), ggf. nach Bestätigung durch den Benutzer B, ausführen - somit also Steuerungsanweisungen darstellen.
- Der Orchestrator CKO, SKO setzt aus den verschiedenen Antworten der beteiligten AI-Agenten AG dynamisch eine Antwort zusammen und liefert diese an den aufrufenden Client bzw. die dortige Client-Komponente CKO zurück.
- Der Client zeigt Antworten oder Rückfragen an und nutzt die lokal verfügbaren Adapter, um die zurückgelieferten Job-Listen (sog. Steuerungsanweisungen) lokal auszuführen.
- Die lokalen Adapter AD liefern ebenfalls Antworten, das können auch Quittierungsmeldungen oder Zustandsinformationen über den industriellen Prozess sein, an den lokalen Client zurück. Dieser verwendet wiederum den Orchestrator CKO, um aus den verschiedenen Antworten eine konsolidierte Antwort zu erstellen, welche dem Nutzer final angezeigt wird.

Die "System Overview" Abbildung (Figur 1) zeigt den typischen Aufbau eines verteilten Al-Systems.

Ein typischer Ablauf (Request/Response Cycle) in diesem System wird durch Figur 2 illustriert.

Zusätzlich ermöglicht das beschriebene Verfahren ebenfalls Interaktionen, welche aus multiplen Zyklen bestehen. Diese ermöglichen Rückfragen an den Benutzer B und/oder voll automatisch beantwortete Rückfragen (Queries) an lokale Adapter AD - siehe Figur 3.

Der wesentliche Unterschied zu anderen bekannten Lösungen besteht darin, dass
1. Der Ausführungsort der durch Al-Agenten AG getriggerten Aktionen unabhängig vom Ausführungsort der Al-Agenten AG ist.
2. Die Ausführung der getriggerten Aktionen integraler Bestandteil des Workflows zwischen Al-Client (insbesondere der Adapter AD) und Al-Agenten AG ist.
3. Das "Response-Format" einer definierten Struktur ("Job Lists", "Text Response", "Query to the User") entspricht. Dieses Format (siehe auch Figur 4) ermöglicht:
   a. Die Ausführung von lokalen Aktionen unter Nutzung der lokal verfügbaren Funktionalität (bereitgestellt durch Adapter AD)
   b. Autonome Rückfragen (Queries) an die lokalen Adapter AD.
4. Der Orchestrator CKO, SKO die strukturierten Antworten verschiedener Al-Agenten zusammenfasst und dadurch eine strukturierte zyklische Kommunikation zwischen Al-Agenten AG und der lokalen Ebene (Client-Ebene) steuert.

## Patentansprüche

1. Verfahren zur Steuerung einer industriellen Automatisierungsanordnung,
wobei mittels zumindest eines auf künstlicher Intelligenz basierten Software-Agenten (AG) - Al-Agenten (AG) - anhand einer durch einen Benutzer (B) eingegebenen natürlichsprachigen Anfrage Steuerungsanweisungen für zumindest eine industrielle Steuerungseinrichtung (SE) der Automatisierungsanordnung generiert und durch die Steuerungseinrichtung (SE) zur Steuerung der Automatisierungsanordnung verwendet werden,
wobei der Steuerungseinrichtung (SE) zumindest ein Adapter (AD) zum Austausch der Steuerungsanweisungen zwischen dem Al-Agenten (AG) und der Steuerungseinrichtung (SE) zugeordnet ist,
**dadurch gekennzeichnet,**
**dass** in einem ersten Schritt durch ein auf künstlicher Intelligenz basiertes Assistenzsystem (CP) - Al-Copilot (CP) - die Anfrage des Benutzers (B) zu einer lokalen Client-Komponente (CKO) eines Orchestrators übermittelt wird,
**dass** in einem zweiten Schritt durch die Client-Komponente (CKO) die Anfrage mit Kontextinformationen über die Automatisierungsanordnung und mit Steuerungsinformationen über den zumindest einen lokalen Adapter (AD) der Steuerungseinrichtung (SE) ergänzt und zu einer Serverkomponente (SKO) des Orchestrators übermittelt wird,
**dass** in einem dritten Schritt durch die Serverkomponente (SKO) anhand der ergänzten Anfrage zumindest einer der Al-Agenten (AG) zur Generierung zumindest eines Teils der zur Erfüllung der Anfrage benötigten Steuerungsanweisungen ausgewählt und abgefragt wird, wobei der jeweils abgefragte Al-Agent (AG) die Anfrage verarbeitet und eine Antwort mit den Steuerungsanweisungen an die Serverkomponente (SKO) zurückübermittelt,
**dass** in einem vierten Schritt durch die Serverkomponente (SKO) die durch den oder die Al-Agenten generierten Steuerungsanweisungen zu der Client-Komponente (CKO) übermittelt werden,
**dass** in einem fünften Schritt durch die Client-Komponente (CKO) anhand der Kontextinformationen und den Steuerungsinformationen der oder die Adapter (AD) mit den Steuerungsanweisungen versorgt und durch den oder die Adapter (AD) und die zumindest eine Steuerungseinrichtung (SE) die Automatisierungsanordnung gesteuert wird.

2. Verfahren nach Patentanspruch 1,
**dadurch gekennzeichnet,**
**dass** in dem dritten Schritt durch die Serverkomponente (SKO) die relevanten Al-Agenten (AG) und die geeignete Aufrufsequenz basierend auf dem Text der Anfrage, der Liste der verfügbaren Agenten (AG), Kontextinformationen, lokalen Fähigkeiten, und/oder dem Automatisierungs-Domänenwissen ermittelt werden.

3. Verfahren nach einem der vorhergehenden Patentansprüche,
**dadurch gekennzeichnet,**
**dass** die Al-Agenten (AG) als ein Dienst eingerichtet sind und dass in dem dritten Schritt die Anfrage und die Antwort in einem definierten Request- und Response-Format formuliert werden.

4. Verfahren nach einem der vorhergehenden Patentansprüche,
**dadurch gekennzeichnet,**
**dass** in dem dritten Schritt die Antwort einen Antworttext, eine Rückfrage und/oder als die Steuerungsanweisungen eine Job-Liste für Aktionen zumindest einen der Adapter (AD) umfasst.

5. Verfahren nach Patentanspruch 4,
**dadurch gekennzeichnet,**
**dass** in dem fünften Schritt im Falle einer Rückfrage durch die Serverkomponente (SKO) diese Rückfragen durch einen Dialog mit dem Benutzer (B) oder durch eine automatisierte Anfrage an einen Adapter (AD) oder andere Systemkomponenten gelöst und eine diesbezügliche Antwort über die Serverkomponente (SKO) an den fragenden Al-Agenten (AG) zurückübermittelt wird, wonach dieser Al-Agent (AG) eine endgültige Antwort generiert.

6. Verfahren nach einem der vorhergehenden Patentansprüche,
**dadurch gekennzeichnet,**
**dass** in dem vierten Schritt durch die Serverkomponente (SKO) Antworten verschiedener Al-Agenten (AG) zu derselben Anfrage zu einer für den betroffenen Adapter (AD) konsolidierten Antwort zusammengefasst werden.

7. Verfahren nach einem der Patentansprüche 4 bis 6,
**dadurch gekennzeichnet,**
**dass** in dem fünften Schritt durch die Serverkomponente (SKO) die Job-Listen an die jeweils zuständigen der Adapter (AD) verteilt werden.

8. Anordnung zur Steuerung einer industriellen Automatisierungsanordnung,
wobei zumindest ein auf künstlicher Intelligenz basierter Software-Agent (AG) - Al-Agent (AG) - dazu eingerichtet ist, anhand einer durch einen Benutzer (B) eingegebenen natürlichsprachigen Anfrage Steuerungsanweisungen für zumindest eine industrielle Steuerungseinrichtung (SE) der Automatisierungsanordnung zu generieren, und wobei die Steuerungseinrichtung (SE) zur Steuerung der Automatisierungsanordnung eingerichtet ist,
wobei der Steuerungseinrichtung (SE) zumindest ein Adapter (AD) zum Austausch der Steuerungsanweisungen zwischen dem Al-Agenten (AG) und der Steuerungseinrichtung (SE) zugeordnet ist,
**dadurch gekennzeichnet,**
**dass** die Anordnung ein auf künstlicher Intelligenz basiertes Assistenzsystem (CP) - Al-Copilot (CP) - zur Übermittlung der Anfrage des Benutzers (B) zu einer lokalen Client-Komponente (CKO) eines Orchestrators umfasst,
**dass** die Client-Komponente (CKO) zur Ergänzung der Anfrage mit Kontextinformationen über die Automatisierungsanordnung und mit Steuerungsinformationen über den zumindest einen lokalen Adapter (AD) der Steuerungseinrichtung (SE) und zur Übermittlung der ergänzten Anfrage an eine Serverkomponente (SKO) des Orchestrators vorgesehen ist,
**dass** die Serverkomponente (SKO) dazu eingerichtet ist, anhand der ergänzten Anfrage zumindest einer der Al-Agenten (AG) zur Generierung zumindest eines Teils der zur Erfüllung der Anfrage benötigten Steuerungsanweisungen auszuwählen und abzufragen, wobei der Al-Agent (AG) zur Verarbeitung der Anfrage und zur Generierung und Rückübermittlung einer Antwort mit den Steuerungsanweisungen an die Serverkomponente (SKO) ausgestaltet ist,
**dass** die Serverkomponente (SKO) dazu eingerichtet ist, die durch den oder die Al-Agenten (AG) generierten Steuerungsanweisungen zu der Client-Komponente (CKO) zu übermitteln, und
**dass** die Client-Komponente (CKO) dazu eingerichtet ist, die Steuerungsanweisungen anhand der Kontextinformationen und den Steuerungsinformationen an den oder die Adapter (AD) zu übermitteln und durch den oder die Adapter (AD) und die zumindest eine Steuerungseinrichtung (SE) die Automatisierungsanordnung zu steuern.
